# EUROPÄISCHE PATENTSCHRIFT

(11) **EP 1 804 995 B1**
(45) Veröffentlichungstag und Bekanntmachung des Hinweises auf die Patenterteilung: **27.04.2011**
(21) Anmeldenummer: 05794716.0
(22) Anmeldetag: 05.09.2005
(51) Int. Cl.: B29C 45/56, B29C 45/67

(54) **VERFAHREN ZUM SPRITZPRÄGEN VON THERMOPLASTISCHEM MATERIAL**
METHOD FOR INJECTION STAMPING A THERMOPLASTIC MATERIAL
PROCEDE D'ESTAMPAGE PAR INJECTION DE MATERIAU THERMOPLASTIQUE

(30) Priorität: 20.10.2004 DE 102004051324
(43) Veröffentlichungstag der Anmeldung: 11.07.2007
(73) Patentinhaber: Sumitomo (SHI) Demag Plastics Machinery GmbH, 90571 Schwaig (DE)
(72) Erfinder: BESOLD, Udo, 91126 Rednitzhembach (DE)
(74) Vertreter: Rau, Manfred
(86) Internationale Anmeldenummer: PCT/EP2005/054358
(87) Internationale Veröffentlichungsnummer: WO 2006/042772

(56) Entgegenhaltungen:
- PATENT ABSTRACTS OF JAPAN Bd. 1997, Nr. 05, 30. Mai 1997 (1997-05-30) -& JP 09 024534 A (UBE IND LTD), 28. Januar 1997 (1997-01-28)
- PATENT ABSTRACTS OF JAPAN Bd. 1997, Nr. 04, 30. April 1997 (1997-04-30) -& JP 08 323832 A (UBE IND LTD), 10. Dezember 1996 (1996-12-10)
- PATENT ABSTRACTS OF JAPAN Bd. 1995, Nr. 03, 28. April 1995 (1995-04-28) -& JP 06 344408 A (MITSUBISHI HEAVY IND LTD), 20. Dezember 1994 (1994-12-20)
- PATENT ABSTRACTS OF JAPAN Bd. 014, Nr. 144 (M-0951), 19. März 1990 (1990-03-19) -& JP 02 009614 A (JAPAN STEEL WORKS LTD:THE), 12. Januar 1990 (1990-01-12)
- PATENT ABSTRACTS OF JAPAN Bd. 1995, Nr. 02, 31. März 1995 (1995-03-31) -& JP 06 304984 A (MITSUBISHI HEAVY IND LTD), 1. November 1994 (1994-11-01)

## Beschreibung

Die vorliegende Erfindung betrifft ein Verfahren zum Spritzprägen von thermoplastischem Material, insbesondere Kunststoff, mit einer Spritzgießmaschine, umfassend eine feste und eine bewegliche Formaufspannplatte, die jeweils eine Formwerkzeughälfte tragen, die in geschlossenem Zustand eine Formkavität definieren, wobei die Formaufspannplatten zur Schließkraftaufnahme durch Säulen verbindbar sind.

Es sind bereits viele Verfahren zum Spritzprägen von thermoplastischem Material bekannt geworden. So ist es beispielsweise aus der EP 0 244 783 B1 bekannt, eine vorvergrößerte Stellung der Formkavität anzufahren, dann Schmelze in diese vorvergrößerte Kavität einzuspritzen und mit einem Kompressionsschritt zu beginnen, bevor das Einspritzen abgeschlossen ist. Nach Vollenden des Kompressions- bzw. Prägeschrittes, in dem die Formkavität auf ihre endgültige Größe gebracht wird, wird die Schmelze so lange unter Druck gehalten, bis sie fest wird.

Die EP 0 477 967 B1 lehrt ein Spritzpräge-Verfahren, bei dem die Formwerkzeughälften zunächst unter die Größe der endgültigen Formkavität zugefahren werden. Die Schmelze wird in das sich öffnende Formwerkzeug eingespritzt und das Zufahren der Formhälften erfolgt, bevor oder wenn das Einspritzen beendet wird.

Aus der EP 0 868 988 A1 ist es bekannt, bei einer vertikalen Schließeinheit ein Formwerkzeug vollständig zu schließen, dann die obere Formaufspannplatte im wesentlichen in einen druckfreien Zustand zu versetzen und geschmolzenes thermoplastisches Material einzuspritzen, wobei durch den Druck der Schmelze die bewegliche Formaufspannplatte weggedrückt wird, und nach Vollenden des Einspritzens die Einspritzöffnung zu verschließen und ein Verprägen zu beginnen. Bei einem Einspritzen in eine horizontale Schließeinheit muss laut diesem Verfahren in jedem Fall ein Gegendruck aufgebracht werden, um eine ungleichmäßige Verteilung der Schmelze zu vermeiden.

Die JP 09024534 A beschreibt ein Verfahren und eine Vorrichtung zum Spritzprägen, wobei zwischen der beweglichen Formplatte und einer Schlossmutter auf der die Formplatte tragenden Säule ein Spalt eingestellt wird, der sich aus der Höhe des Formwerkzeuges und der Teilung des Säulengewindes, auf dem die Schlossmutter sitzt, errechnet. Damit wird ein störungsfreier Antrieb der Schlossmuttern erreicht. Durch den Spalt ist es ferner möglich, dass sich die bewegliche Formplatte gegenüber der Säule beim Einspritzen von Kunststoff in das Formwerkzeug verschiebt, wobei dieses Auffahren der Form durch einen entsprechenden Lagesensor detektiert wird. Bei Erreichen eines bestimmten Auffahrweges wird das Wiederschließen der Form für den Prägevorgang initiiert.

Die JP09024534 offenbart die folgenden Merkmale des Anspruchs 1:

Verfahren zum Spritzprägen von thermoplastischem Material, insbesondere Kunststoff, mit einer Spritzgießmaschine, umfassend eine feste und eine bewegliche Formaufspannplatte, die jeweils eine Formwerkzeughälfte tragen, die in geschlossenem Zustand eine Formkavität definieren, wobei die Formaufspannplatten zur Schließkraftaufnahme durch Säulen verbindbar sind,
- Einstellen eines Prägespaltes,
- Zufahren des Formwerkzeugs,
- Verriegeln der Formaufspannplatten durch das Einfahren von Verriegelungselementen, insbesondere Klammern, in entsprechende Aufnahmeelemente, insbesondere Nuten,
- Beginn des Einspritzens von plastifiziertem Material,
- Öffnen des Formwerkzeugs durch den von der eingespritzten Schmelze aufgebauten Druck bis zu einem Abstand zwischen den Formwerkzeughälften, der dem Prägespalt entspricht, und
- Schließen des Formwerkzeugs mit Verprägen der eingebrachten Schmelze unter Aufbringen von Schließkraft.

Nachteilig an all diesem Verfahren ist es entweder, dass vor Beginn des Einspritzens eine genau definierte Position der Formwerkzeughälften und damit der Formaufspannplatten angefahren werden muss, was insbesondere bei hydraulischen Spritzgießmaschinen nur sehr langsam und zeitaufwendig möglich ist. Im Falle des Einbringens der Schmelze und des Aufschiebens der bewegliche Formaufspannplatte durch einen Schmelzedruck wird keinerlei definierte Position der beweglichen Formaufspannplatte angefahren. Der Prägeschritt wird begonnen sobald alle Schmelze eingebracht und die Einspritzöffnung durch geeignete Mittel verschlossen worden ist. Bei diesem Verfahren ist es auch nicht möglich, das Einspritzen während des Prägens fortzusetzen. Insbesondere im Falle einer horizontalen Spritzgießmaschine ist bei Fehlen einer vorgegebenen Prägeposition mit einer ungleichmäßigeren Schmelzeverteilung zu rechnen.

Aufgabe der vorliegenden Erfindung ist es deshalb, ein Verfahren zum Spritzprägen von thermoplastischem Material vorzustellen, das eine hohe Teilequalität sicherstellen kann, einfach umsetzbar bei insbesondere geringer Zykluszeit ist, bei dem eine Prägeposition einfach und zeitoptimal angefahren werden kann, und bei dem möglichst wenige Verfahrensschritte vorgenommen werden müssen.

Diese Aufgabe wird durch ein Verfahren zum Spritzprägen von thermoplastischem Material mit den Merkmalen des Patentanspruchs 1 gelöst.

Erfindungsgemäß umfasst dieses Verfahren die Schritte des Einstellen eines Prägespaltes zwischen Aufnahmeelementen der Säulen und entsprechenden Verriegelungselementen, des Zufahrens des Formwerkzeugs, des Verriegelns der Formaufspannplatten durch das Einfahren von Verriegelungselementen in entsprechende Aufnahmeelemente, wobei hier insbesondere Klammem in entsprechende Nuten einfahren können, des Beginnens des Einspritzens von plastifiziertem Material, beispielsweise mittels einer nach dem Schnecken-Kolbenprinzip arbeitenden Plastifiziereinheit, des Öffnens des Formwerkzeugs durch einen von der eingespritzten Schmelze in dem Formwerkzeug aufgebauten Druck unter Anlage der Verriegelungselemente an den Aufnahmeelementen bis zu einem mechanisch begrenzten Abstand zwischen den Formwerkzeughälften, der dem Prägespalt entspricht und des Schließens des Formwerkzeugs mit Verprägen der eingebrachten Schmelze unter Aufbringen der Schließkraft. Bevorzugt ist das Formwerkzeug derart auf den Formaufspannplatten angebracht, dass das Öffnen und Schließen des Formwerkzeugs einem Auseinander- bzw. Zusammenfahren der Formaufspannplatten entspricht. Die bewegliche Formaufspannplatte kann nach einem Zusammenfahren der Formaufspannplatten in der zusammengefahrenen Position gehalten werden und erst bei Beginn des Einspritzens der Schmelze freigegeben werden, oder aber auch direkt nach dem Zusammenfahren in einen im wesentlichen kraftfreien Zustand gebracht werden.

Beim letzten Schritt, dem Schließen des Formwerkzeugs unter Aufbringen einer Schließkraft, werden die Formwerkzeughälften unter Druck zusammengefahren, bis die endgültige Größe der Formkavität erreicht ist. Im Anschluss kann noch weiter ein Schließdruck aufgebracht werden, bis die Schmelze in der Formkavität soweit ausgehärtet ist, dass das so hergestellte Formteil entformt werden kann.

Das vorliegende Verfahren eignet sich insbesondere für Spritzgießmaschinen, bei denen Säulen die Formaufspannplatten zur Schließkraftaufnahme verbinden und die Formaufspannplatten durch Einfahren von Verriegelungselementen in entsprechende Aufnahmeelemente vor dem Aufbringen der Schließkraft gegenüber entsprechenden kraftaufnehmenden Elementen verriegelbar sind. Beim Verriegeln der Formaufspannplatten werden diese derart gegen die die Schließkraft aufnehmenden Säulen positioniert, dass bei einem Aufbringen der Schließkraft auf das von den Formaufspannplatten getragene Formwerkzeug diese über die Säulen übertragen wird.

Bei solchen Spritzgießmaschinen kann es sich beispielsweise um 3-Platten-Maschinen handeln, die eine Abstützplatte sowie eine bewegliche und eine feste Formaufspannplatte aufweisen, wobei die drei Platten durch Säulen verbunden sind, und Verriegelungselemente vorgesehen sind, die eine Schließposition des Formwerkzeugs festlegen können, in der dann über entsprechende Mittel, beispielsweise Druckkissen, die Schließkraft zwischen beweglicher und fester Formaufspannplatte aufgebracht werden kann. Hier ist es beispielsweise denkbar, dass die bewegliche Formaufspannplatte einen Kolbenfortsatz aufweist, der innerhalb eines Kolbenzylinders verfahrbar und gegenüber diesem durch Einfahren von Verriegelungselementen, beispielsweise in Form von druckbeaufschlagten Bolzen, die in Aufnahmeelemente, beispielsweise Ringnuten, eingreifen, verriegelbar ist. Der Zylinderkolben ist in einem auf der Abstützplatte montierten Druckzylinder verfahrbar gelagert und mit Druck beaufschlagbar. Nach einem Zusammenfahren der festen und der beweglichen Formaufspannplatte entlang von Säulen durch eine separaten Verfahrzylinder wird die bewegliche Formaufspannplatte gegenüber dem Zylinderkolben verriegelt und durch Aufbringen von Druck im Druckzylinder die Schließkraft zwischen fester und beweglicher Formaufspannplatte aufgebracht, wobei diese über die Säulen übertragen wird.

Des weiteren sind Spritzgießmaschinen bekannt, bei denen die Verriegelungselemente an der Abstützplatte oder aber der festen Formaufspannplatte und die Aufnahmeelemente an den Säulen vorgesehen sind, was insbesondere dann von Vorteil ist, wenn die Holme mittels Holmzugsvorrichtungen aus dem Werkzeugbereich herausgefahren werden können. Der Schließkraftaufbau kann hierbei über Druckkissen erfolgen, es kann aber beispielsweise auch insbesondere auf Seiten der feststehenden Formaufspannplatte eine Sandwich-Struktur vorgesehen sein, bei der zwischen der feststehenden und der ihr zugeordneten und das Formwerkzeug tragenden Sandwich-Platte ein Druck aufgebracht wird.

Insbesondere im Fall von 2-Platten-Spritzgießmaschinen sind solche Verriegelungselemente, die mit entsprechenden Aufnahmeelementen zusammenwirken, bekannt. Wieder können die Aufnahmeelemente an den Säulen vorgesehen sein, während die Verriegelungselemente von der festen oder der beweglichen Formaufspannplatte getragen werden können. Der Schließkraftaufbau kann beispielsweise durch Druckkissen erfolgen, die an den vier Säulen oder aber auch an den Verriegelungselementen jeweils relativ zu einer Platte angreifen. Auch im Fall von 2-Platten-Maschinen kann eine Platte nach Art einer Sandwich-Platte ausgebildet sein, so dass die Schließkraft durch Druckkolben zwischen der jeweiligen Formaufspannplatte und ihrer zugeordneten Sandwich- bzw. Druckplatte aufgebracht werden kann.

Erfindungsgemäß erfolgt das Verriegeln sobald das Formwerkzeug zugefahren ist, und das plastifizierte Material wird aus einer Plastifiziereinheit durch entsprechende Einspritzöffnungen im Formwerkzeug in die Formkavität eingespritzt. Die bewegliche Formaufspannplatte bewegt sich unter Einfluss des von der eingespritzten Schmelze aufgebauten Drucks gegen die Trägheitskraft sowie mögliche Reibkräfte und das Formwerkzeug beginnt sich zu öffnen. Dieses passive Öffnen, das nicht aktiv durch Ansteuerung der beweglichen Formaufspannplatte durch Mittel zum Bewegen derselben, beispielsweise Verfahrzylinder, erfolgt, vereinfacht das vorliegende Verfahren weiter, da die Öffnungsbewegung im wesentlichen automatisch aufgrund des Einspritzens des zu verprägenden thermoplastischen Materials erfolgt. Sobald das Formwerkzeug so weit geöffnet ist, dass der Abstand zwischen den Formwerkzeughälften dem eingestellten Prägespalt entspricht, was bevorzugter Weise einem Erreichen einer mechanischen Begrenzung entspricht, wird mit dem Schließen des Formwerkzeugs durch Beaufschlagen entsprechender Mittel zum Aufbringen der Schließkraft mit dem Verprägen der eingebrachten Schmelze in der Formkavität begonnen. Sobald durch das Aufbringen der Schließkraft die bewegliche Formaufspannplatte derart an die feste Formaufspannplatte herangefahren wurde, dass die endgültige Größe der Formkavität erlangt ist, wird mit dem Verprägen aufgehört, und das Formwerkzeug solange geschlossen gehalten, bis das thermoplastische Material so weit abgekühlt ist, dass es aus dem Formwerkzeug entnommen werden kann.

Vorteilhaft am erfindungsgemäßen Verfahren ist, dass eine Einstellung des Prägespaltes erfolgt, bevor die Formaufspannplatten in ihrer Ausgangsposition befindlich sind, die sie direkt vor dem Einspritzen von neuem plastifizierten Materials einnehmen, sie kann also insbesondere vor einem Zufahren des Formwerkzeugs für einen neuen Spritzprägevorgang erfolgen. Durch das frühzeitige Einstellen des Prägespaltes können die folgenden Schritte schneller durchlaufen werden. Unter Prägespalt ist hier im wesentlichen eine Vorgabe des Abstandes zu verstehen ist, der zwischen den Formwerkzeughälften bei Beginn des Prägeschritts herrschen soll. Somit ist beim Zufahren des Formwerkzeugs insbesondere keine so genaue Positionierung der Platten und somit der Werkzeughälften gegeneinander mehr notwendig, es muss beispielsweise nicht eine Plattenstellung angefahren werden, in der eine exakt vergrößerte oder verkleinerte Formkavität gewährleistet ist. Der Schritt des Zufahrens kann vielmehr zeitsparend absolviert werden. Insbesondere auch durch das vorgesehene, im wesentlichen passive Öffnen des Formwerkzeugs unter Einfluss des Drucks der eingespritzten Schmelze kann ein einfach zu steuerndes Spritzprägeverfahren vorgestellt werden. Hierbei kann das Zufahren des Formwerkzeugs bzw. das Zusammenfahren der Formaufspannplatten besonders vorteilhaft durch einen, beispielsweise hydraulisch ansteuerbaren, Verfahrzylinder unter geringer Kraftaufbringung erfolgen.

Gemäß einer besonders vorteilhaften Weiterbildung der vorliegenden Erfindung umfasst das Einstellen des Prägespaltes das Anfahren einer entsprechenden Position der Aufnahmeelemente relativ zu den Verriegelungselementen vor dem Verriegeln derselben. Hierbei werden entweder die Aufnahmeelemente bzw. die sie tragenden Bauteile relativ zu den Verriegelungselementen oder aber umgekehrt die zweiten relativ zu den ersten verfahren. Diese Verfahrbewegung kann im Normalfall entlang einer durch die Schließkraft vorgegebenen Richtung, beispielsweise parallel zu den Säulen erfolgen. Der Prägespalt wird hierbei derart eingestellt, dass zwischen korrespondierenden, im Schließzustand, d. h. bei Aufbringen einer Schließkraft zwischen beweglicher und fester Formaufspannplatte, kraftaufnehmenden Flächen ein im wesentlichen dem Prägespalt entsprechender Abstand bzw. ein Abstand der zumindest dem Prägespalt entspricht, eingehalten wird. Die genaue Abstandskorrelation hängt von der Ausbildung der Verriegelungselemente bzw. der Aufnahmeelemente ab. Diese können beispielsweise nach Art einfacher "Caliber", d. h. Klammern, die in Ausnehmungen, beispielsweise Nuten einfahren können, ausgebildet sein, oder aber auch nach Art von Sägezahnbacken, deren Zähne in mehr als eine Nut einfahren, und bei denen ggf. die Abstände zwischen den einzelnen kraftaufnehmenden Flächen der Sägezähne zu- bzw. abnehmen, um einer Holmdehnung beim Aufbringen der Schließkraft Rechnung zu tragen. Auch bei dieser Ausgestaltung muss gewährleistet sein, dass zwischen kraftaufnehmenden Flächen mindestens ein dem Prägespalt entsprechender Abstand eingehalten wird, d. h. dass zwischen der zuerst zur Auflage gekommenen kraftaufnehmenden Fläche eines derartigen Verriegelungselements und einer zu ihr korrespondierenden kraftaufnehmenden Fläche des Aufnahmeelements ein dem Prägespalt entsprechender Abstand eingehalten wird. Das Einstellen des Prägespaltes kann also bereits vor einem Zufahren des Formwerkzeugs durch geeignete Positioniermittel vorgenommen werden, wobei hier vorteilhafter Weise meist geringere Massen gegeneinander verfahren und positioniert werden müssen, was sich in geringerer Trägheit und schnellerer Ansteuerbarkeit äußert. Das Anfahren der Prägespaltposition kann beispielsweise in einem im wesentlichen nicht verriegelten Zustand der Verriegelungs- und Aufnahmeelemente erfolgen. Gemäß einer besonders bevorzugten Ausbildung der Erfindung erfolgt das Anfahren der Prägespaltposition bereits bei einem Entlasten der Säulen. Ein solches Entlasten der Säulen muss zwingend vorgesehen werden, wenn eine Schließkraftübertragung über Säulen und korrespondierende Verriegelungs- und Aufnahmeelemente erfolgt. Nach Aufbringen der Schließkraft befinden sich die entsprechenden kraftaufnehmenden Flächen von Verriegelungs- und Aufnahmeelementen noch unter Schließkraft in Kontakt, so dass ein Ausfahren der Verriegelungselemente aus den Aufnahmeelementen nur unter großem Kraftaufwand und starker Abnutzung der korrespondierenden Flächen möglich ist. Aus diesem Grund muss das sogenannte Säulenentlasten durchgeführt werden, das bewirkt, dass über die Säulen keine Schließkraft mehr übertragen wird, und somit die Aufnahme- und Verriegelungselemente nicht mehr oder zumindest nicht unter Belastung aneinander anliegen. Nun können die Verriegelungselemente ohne starken Verschleiß einfach aus den Aufnahmeelementen ausgefahren werden. Bislang erfolgt ein Säulenentlasten häufig über eine gegenläufige Kraft- bzw. Druckbeaufschlagung der Mittel zum Aufbringen des Schließkraft und zeitgesteuert, so dass die Verriegelungselemente in etwa mittig in den Aufnahmeelementen positioniert wurden. Die Verriegelungselemente müssen relativ zu den Aufnahmeelementen erfindungsgemäß derart ausgebildet sein, dass ein Spiel zwischen den beiden ermöglicht wird, so dass zumindest ein im wesentlichen dem Prägespalt entsprechender Abstand zwischen korrespondierenden schließkraftaufnehmenden Flächen der beiden im wesentlichen in Richtung der Schließkraft eingehalten werden kann. Dies bedeutet beispielsweise im Falle von Nuten als Aufnahmeelemente und "Calibern" als Verriegelungselemente, dass eine lineare Erstreckung der "Caliber" mindestens um den Prägespalt kleiner als eine lineare Erstreckung der Nuten in Richtung der Schließkraft eingehalten werden sollte.

Ein solches Entlasten der Säulen muss beim Betreiben einer Spritzgießmaschine mit Verriegelungs- und Aufnahmeelementen also in jedem Fall durchgeführt werden, unabhängig davon, ob es sich um ein einfaches Spritzgießen oder ein Spritzprägen handelt, bevor das Formwerkzeug mit dem fertiggestellten, ausgehärteten Formteil geöffnet werden kann. Dass das Anfahren der Prägespaltposition bereits gleichzeitig mit einem notwendigen Entlasten der Säulen erfolgt, ist also besonders vorteilhaft. Ein ohnehin erforderlicher Schritt kann somit erfindungsgemäß dazu benutzt werden, bereits einen weiteren erforderlichen Schritt durchzuführen, der sonst erst zu einem späteren Zeitpunkt separat vorgenommen werden müsste. Somit lässt sich das erfindungsgemäße Verfahren zeitoptimaler und unter geringerem Steuerungsaufwand durchführen, da ein separater Schritt des Verfahrens im wesentlichen überflüssig wird.

Durch das Einstellen des Prägespaltes derart, dass bei einem Verriegeln zwischen den entsprechenden kraftaufnehmenden Flächen von Aufnahme- und Verriegelungselementen derselbe gewahrt ist, lässt sich das Öffnen des Formwerkzeugs im Verriegelungszustand mechanisch durch den Anschlag der entsprechenden Flächen der Verriegelungselemente an denen der Aufnahmeelemente begrenzen. Bei Erfolgen eines Anschlags befinden sich auch die Formwerkzeughälften also im Abstand eines Prägespalts und eine Distanz zwischen den beiden Formaufspannplatten muss nicht aufwendig eingestellt werden, da sie durch eine einfache mechanische Blockade angezeigt wird. Dies wirkt besonders vorteilhaft mit dem insbesondere passiven Öffnen des Formwerkzeugs durch den von der eingespritzten Schmelze aufgebauten Druck zusammen, wobei nur ein geringer bzw. kein Steuerungsaufwand notwendig ist.

Sobald die korrespondierenden kraftaufnehmenden Flächen von Verriegelungs- und Aufnahmeelementen zur Anlage kommen, was beispielsweise durch einen Positionsschalter leicht detektierbar ist, kann mit einem Schließen des Formwerkzeugs mit Verprägen der eingebrachten Schmelze unter Aufbringen der Schließkraft begonnen werden. Zwischen Erreichen des Prägespalts und dem Beginn des Schließens des Formwerkzeugs kann auch eine Verzögerung, gegebenenfalls unter fortgesetztem Einspritzen vorgesehen werden.

Gemäß einer bevorzugten Weiterbildung der Erfindung kann die Schließkraft durch hydraulische Druckkissen aufgebracht werden. Diese sind genau ansteuerbar. Bei einem Entlasten der Säulen nach einem fertiggestellten Spritzprägevorgang und vor einem Öffnen der Formvorrichtung zum Entnehmen des fertigen Formteils können deshalb die Druckkissen derart angesteuert werden, dass die Prägespaltposition, also der dem Prägespalt entsprechende Abstand zwischen entsprechenden kraftaufnehmenden Flächen von Verriegelungs- und Aufnahmeelementen, angefahren werden kann. Sobald diese Position beispielsweise durch genaue Messung der gegen die Schließkraft aufgebrachten Ölmenge je Druckkissen erreicht ist, befinden sich die Verriegelungselemente in den Aufnahmeelementen beabstandet von kraftaufnehmenden Flächen der letzteren und können ohne weiteres gezogen, d. h. aus den Aufnahmeelementen herausgefahren werden. In dieser Prägespaltposition werden vorteilhafter Weise die Druckkissen blockiert. Hierunter kann beispielsweise bei doppelwirkenden hydraulischen Zylindern als Druckkissen verstanden werden, dass sowohl Ölzu- als auch Ölabfuhr zu den beiden Kammern verhindert werden. Sobald die Druckkissen in dieser Position blockiert sind, bedeutet das, dass der Prägespalt zwischen Verriegelungs- und Aufnahmeelementen in einem Schließzustand der Form, in dem diese sich zu diesem Zeitpunkt noch befindet, fest eingestellt ist, unabhängig davon, ob in der Folge die Form geöffnet oder geschlossen wird. Somit ist bereits vor einem Öffnen der Form das Einstellen des Prägespaltes erfolgt, und muss im nächsten Zyklus nicht nach einem Schließen der Form erneut vorgenommen werden.

Besonders vorteilhafter Weise können die Aufnahmeelemente an den Säulen selbst vorgesehen sein. Hierbei können sie z.B. in Form mehrerer Ringnuten konzentrisch um die Säulen an deren freien, d.h. ziehbaren Enden ausgebildet sein. Ein Verfahren der Aufnahmeelemente relativ zu den Verriegelungselementen kann in diesem Fall beispielsweise durch ein Verfahren der Säulen gegenüber einer sie haltenden beweglichen oder festen Formaufspannplatte, oder aber auch durch ein Verfahren der Verriegelungselemente relativ zu einer der Formaufspannplatten erfolgen. Dies hat den Vorteil, dass nur relativ geringe Massen verfahren werden müssen.

Besonders vorteilhafter Weise kann das Einstellen des Prägespaltes mit Hilfe von an den vier Säulen vorgesehenen Wegmeßsystemen erfolgen. Diese können beispielsweise den Abstand zwischen einem Säulenende und einer die Säulen tragenden Formaufspannplatte aufnehmen, entsprechende Mittel zum Schließkraftaufbringen, beispielsweise hydraulische Druckkissen können dann in Abhängigkeit von dem jeweiligen an der Säule gemessenen Wegsignal angesteuert und so die Säulen und ihre Nuten positioniert werden.

Gemäß einer bevorzugten Ausgestaltung der Erfindung wird das Formwerkzeug zuerst auf Anschlag zugefahren, d.h. die Formwerkzeughälften berühren sich so, dass die Größe der Formkavität im wesentlichen einer endgültigen Kavitätsgröße entspricht. Dies hat den Vorteil, dass die Formaufspannplatten besonders exakt positioniert werden können und das Werkzeug in einen gewünschten Zustand, insbesondere im Hinblick auf eventuell vorsehbare Kerne, Schieber oder Tauchkanten, gebracht werden kann. Auch kann ein gegebenenfalls vorhandenes Dekor wie Textil oder Folie durch dieses Zufahren bereits vorgeformt werden. Des weiteren lässt sich hierdurch sicherstellen, dass kein Bauteil mehr im Werkzeug befindlich ist. Das Zufahren des Formwerkzeugs auf Anschlag ist besonders einfach und zeitgünstig durchführbar, es muss keine aufwendige Positionierung der beweglichen Formaufspannplatte relativ zur festen Formaufspannplatte vorgenommen werden.

Der Beginn des Einspritzens und ein eventuelles Freigeben der beweglichen Formaufspannplatte erfolgen bevorzugt im wesentlichen gleichzeitig. Das Formwerkzeug kann nach dem Zufahren auf Anschlag gegebenenfalls durch den Verfahrzylinder oder ähnliche Verfahrmittel im zugefahrenen Zustand gehalten werden und bei Beginn des Einspritzens freigegeben werden. Die bewegliche Formaufspannplatte kann auch gleich nach Zufahren des Formwerkzeugs freigegeben werden, wenn keine weiteren, das Formwerkzeug öffnenden Kräfte wirken. Während des Öffnens der beweglichen Formaufspannplatte erfolgt das Einspritzen in die sich öffnende Formkavität. Die Schmelze wird bei dieser Ausgestaltung beim Einspritzen im wesentlichen nur durch die auf die bewegliche Formaufspannplatte wirkenden Trägheits- und Reibkräfte mit Druck beaufschlagt. Durch das Vermeiden eines Einspritzens in eine zuvor vergrößerte Kavität kann verhindert werden, dass sich in derselben ein Freistrahl der Schmelze bildet, der stark Oberflächenmarkierungen im fertigen Formteil führen kann, da bei einem Auftreffen des Freistrahls auf eine Formoberfläche die Schmelze an derselben einfriert. Zudem kann durch das parallel zum Öffnen des Formwerkzeugs erfolgende Einspritzen im wesentlichen verhindert werden, dass sich Markierungen ausbilden, die durch die Größe des Schmelzekuchens hervorgerufen werden, der entsteht, wenn Schmelze in das auf Prägespalt vorgeöffnete Werkzeug eingespritzt wird. In diesem Fall bleibt nämlich der Schmelzekuchen kurzfristig stehen und die Schmelzefront friert ein, bevor das Formwerkzeug geschlossen wird, d.h. bevor das Prägen beginnt. Durch das erfindungsgemäße Einspritzen in eine sich öffnende Formkavität kann ein solches kurzfristiges Stehenbleiben des Schmelzekuchens verhindert oder zumindest reduziert werden.

Das Einspritzen von Schmelze kann insbesondere auch während des Schließens des Formwerkzeugs, also nach Erreichen der durch den Prägespalt gegebenen Öffnungsposition des Formwerkzeugs fortgesetzt werden. Hierdurch lässt sich eine weitere Zykluszeitverkürzung erzielen. Gegebenenfalls kann das Prägen auch noch über das Einspritzen und das Aufbringen von Nachdruck hinaus andauern, es ist aber auch möglich, das Einspritzen und/oder das Aufbringen von Nachdruck noch fortzusetzen, wenn der Prägeschritt bereits abgeschlossen ist. Insbesondere in Abhängigkeit von den verarbeiteten Materialien sind die entsprechenden Abläufe vorzusehen.

Das Öffnen des Formwerkzeugs, insbesondere durch den von der eingespritzten Schmelze aufgebauten Druck kann durch Kerne unterstützt werden, die im Bereich des Formwerkzeugs vorgesehen sind. Solche Kerne können insbesondere federbelastet sein und so das passive Öffnen des Formwerkzeugs insbesondere in einer Anfangsphase unterstützen. Die Kerne können auch aktiv ansteuerbar sein, besonders bevorzugt sind jedoch federbelastete Kerne, die beim Schließen des Formwerkzeugs in Position gebracht werden müssen. Alternativ ist es auch möglich, dass beispielsweise vorgespannte oder auch ansteuerbare Tauchkanten den Öffnungsvorgang, zumindest anfänglichen, unterstützen.

Beim Spritzprägen werden häufig großformatiger Teile hergestellt, wie sie beispielsweise in der Autoproduktion benötigt werden, die oft unter Verwendung von Kernen produziert werden, um in diesen häufig flächigen Teilen entsprechende Aussparungen von Schmelze freihalten. Die Unterstützung des passiven Öffnens des Formwerkzeugs durch beispielsweise vorbelastete Kerne kann sich als vorteilhaft erweisen, da so die eingebrachte Schmelze zumindest anfänglich einem reduzierten Druck unterliegt und nur eine geringere Scherbelastung erfährt.

Insbesondere bei Vorsehen von Kernen kann es von Vorteil sein, dass das Formwerkzeug nach dem Zufahren und vor dem Einspritzen zugehalten wird, um ein vorzeitiges Öffnen des Formwerkzeugs auch ohne Einbringen von Schmelze zu verhindern.

Gemäß einer weiteren vorteilhaften Ausbildung der vorliegenden Erfindung kann während des passiven Öffnens des Formwerkzeugs, das im wesentlichen durch den von der eingespritzten Schmelze aufgebauten Druck und/oder von federbelasteten Kernen oder ähnlichen in der Werkzeugkavität oder an deren Begrenzung vorgesehenen Elementen veranlasst wird, ein definierter Gegendruck auf die bewegliche Formaufspannplatte aufgebracht werden. Dies verhindert ein vorschnelles Öffnen der Formkavität auf den Prägespalt und gewährleistet ein langsames sukzessives Füllen des zu verprägenden Volumens, also der sich vergrößernden Formkavität. Hierdurch kann das Risiko des Ausbildens eines zu Oberflächenmarkierungen führenden Schmelzekuchens in der Formkavität weiter reduziert werden. Ein solcher definierter Gegendruck lässt sich beispielsweise durch Beaufschlagen eines Verfahrzylinders mit Druck während des Öffnens erzielen.

Besonders vorteilhafter Weise kann mit dem erfindungsgemäßen Verfahren bzw. seinen Weiterbildungen ein langfaserverstärktes Thermoplast (LFT) verarbeitet werden. Insbesondere langfaserverstärkte Schmelzen sind beim Einspritzen in ein Formwerkzeug starker Scherung ausgesetzt, wodurch die Fasern verletzt und letztendlich gekürzt werden können, so dass sich die mechanischen Eigenschaften eines fertigen Formteils verschlechtern. Längere Fasern führen stets zu besseren mechanischen Eigenschaften, insbesondere Festigkeit, wenn eine gute Durchmischung bzw. Benetzung der Fasern mit Schmelze gegeben ist. Um die starke Scherung beim Einspritzen einer langfaserverstärkten Schmelze zu vermeiden, bietet sich insbesondere ein Verarbeiten der langfaserverstärkten Schmelze mittels Spritzprägen an. Durch das erfindungsgemäße passive Öffnen der Formaufspannplatten unter Schmelzedruck erfolgt nur eine relativ geringe Belastung, insbesondere Scherung, der langfaserverstärkten Schmelze beim Einbringen derselben in die Formkavität. Durch das Einspritzen in die sich öffnende Formkavität können weiter, wie bereits erwähnt, Oberflächenmarkierungen effektiv vermieden werden. Bei der Verarbeitung von langfaserverstärkten Thermoplasten kann insbesondere auf ein Einspritzen mit geringer Geschwindigkeit, ein geringes Aufbringen von Nachdruck und geringen Staudruck geachtet werden. Das Formwerkzeug selbst sollte bevorzugt große Fließquerschnitte und wenig Schmelzeumlenkungen aufweisen. Insbesondere bei der Herstellung der oft großflächigen Automobilteile, die sich besonders vorteilhaft mittels Spritzprägen erzeugen lassen, ist ein Verarbeiten von langfaserverstärkten Thermoplasten vorteilhaft, da diese eine zusätzliche, insbesondere in diesen Einsatzbereichen benötigte Stabilität der fertigen Teile garantieren.

Anhand der folgenden Figuren soll das erfindungsgemäße Verfahren anhand einer Zweiplattenspritzgießmaschine noch näher erläutert werden. Es zeigen:
- **Figur 1:**: eine schematische Schnittdarstellung einer Schließeinheit einer Zweiplat- tenspritzgießmaschine,
- **Figur 2:**: eine schematische Schnittdarstellung von in korrespondierende Aufnah- meelemente eingefahrenen Verriegelungselementen beim Verriegeln ei- ner Spritzgießmaschine, und
- **Figur 3:**: dieselben Verriegelungs- bzw. Aufnahmeelemente bei Erreichen einer geöffneten Position des Formwerkzeugs mit Anliegen der korrespondie- renden kraftaufnehmenden Flächen von Verriegelungs- und Aufnahme- elementen der Spritzgießmaschine.

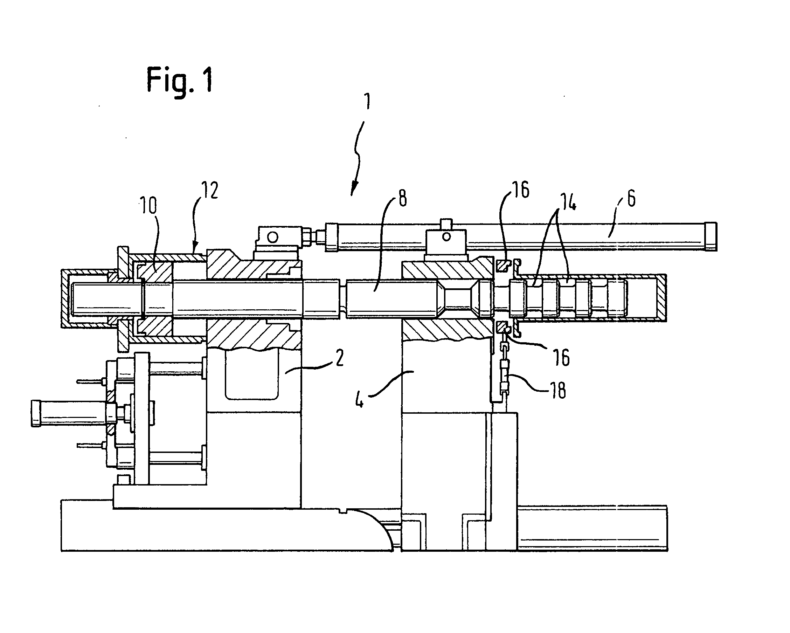

Figur 1 zeigt die Schließeinheit 1 einer Zweiplattenspritzgießmaschine schematisch im Längsschnitt. Eine bewegliche Formaufspannplatte 2 kann gegenüber einer festen Formaufspannplatte 4 mittels eines Verfahrzylinders 6 verfahren werden. Auf den jeweiligen Formaufspannplatten 2, 4 sind entsprechende, nicht dargestellte Formwerkzeughälften halterbar, die in geschlossenem Zustand eine Formkavität definieren. Säulen 8 der Spritzgießmaschine sind in der beweglichen Formaufspannplatte 2 verschieblich gelagert und können die feste Formaufspannplatte 4 durchsetzen. Die Säulen 8 sind mit dem Kolben 10 eines jeweiligen Druckkissens 12 fest verbunden. Durch entsprechendes Beaufschlagen einer vorderen oder hinteren Druckkammer des Druckkissens 12 lassen sich die Säulen 8 relativ zur beweglichen Formaufspannplatte 2 verfahren. In einem geschlossenen Zustand der Schließeinheit 1 lässt sich über die entsprechende Beaufschlagung der Schließkraftzylinder der Druckkissen 12 die Schließkraft aufbauen.

Auf der der festen Formaufspannplatte 4 zugewandten Seite der Säulen 8 weisen diese jeweils mehrere Nuten 14 auf, in die Caliber 16, die an der festen Formaufspannplatte 4 gelagert und durch Verriegelungszylinder 18 ansteuerbar sind, eingefahren werden können. In Abhängigkeit von einer vorgewählten Formhöhe, die durch die Höhe der Formwerkzeughälften zwischen beweglicher 2 und fester Formaufspannplatte 4 in einem zugefahrenen Zustand des Formwerkzeugs, d.h. in einem Zustand in dem sich die Formwerkzeughälften im wesentlichen im Anschlag befinden, bestimmt wird, wird eine Vorjustierung der Schließeinheit 1 vorgenommen. Hierbei werden die Druckkissen 12 derart angesteuert, dass die Säulen 8 in eine Position verfahren werden, in der die Caliber 16, die analog an jeder Säule vorgesehen sind, gut in die nächstliegende Nut 14 einfahren können. Das Vorsehen mehrerer Nuten 14 wird also durch verschieden hohe zum Einsatz kommende Formwerkzeuge bedingt. Ausgehend von dieser Voreinstellung kann nun erfindungsgemäß mit Hilfe von nicht näher dargestellten Wegmeßsystemen, die zum Beispiel den Abstand zwischen einem Säulenende der Säulen 8 und der beweglichen Formaufspannplatte 2 oder aber auch einem Ende der Druckkissen 12 messen können, ein Prägespalt 20 eingestellt. Dies bedeutet , dass die Relativposition zwischen den Calibern 16 und der Nut 14, mit der sie zusammenwirken können, derart eingestellt wird, dass zwischen einer, in Figur 1 rechten, Randfläche der Caliber 16 und einer rechten Begrenzungsfläche der entsprechenden Nut 14 genau der Prägespalt 20 eingehalten wird, wenn die Formwerkzeughälften in einem zugefahrenen Zustand befindlich sind. Die entsprechende Feineinstellung lässt sich hierbei wieder durch Beaufschlagen der Druckkissen 12 mit Hydrauliköl bewerkstelligen. Der zur Prägespaltposition gehörige, von den Wegmeßsystemen aufgenommene Abstand bzw. die entsprechende Einstellung der jeweiligen Druckkissen 12 wird gespeichert.

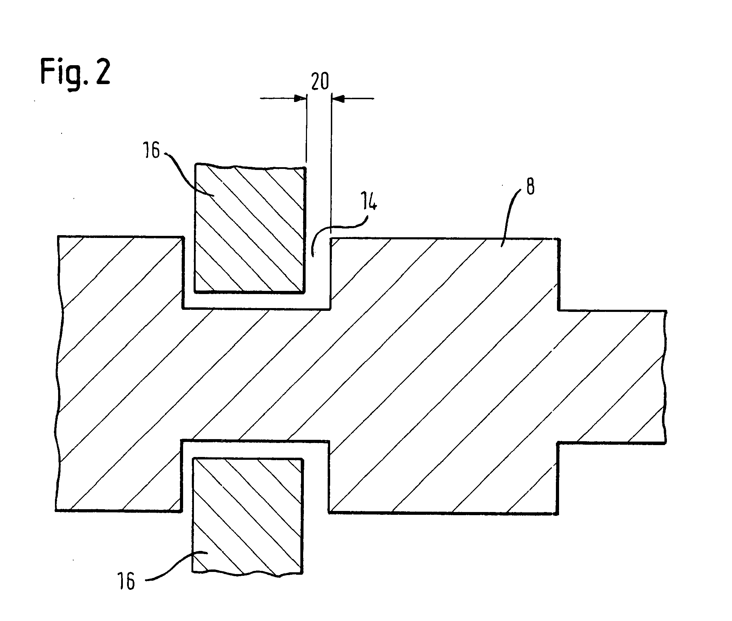

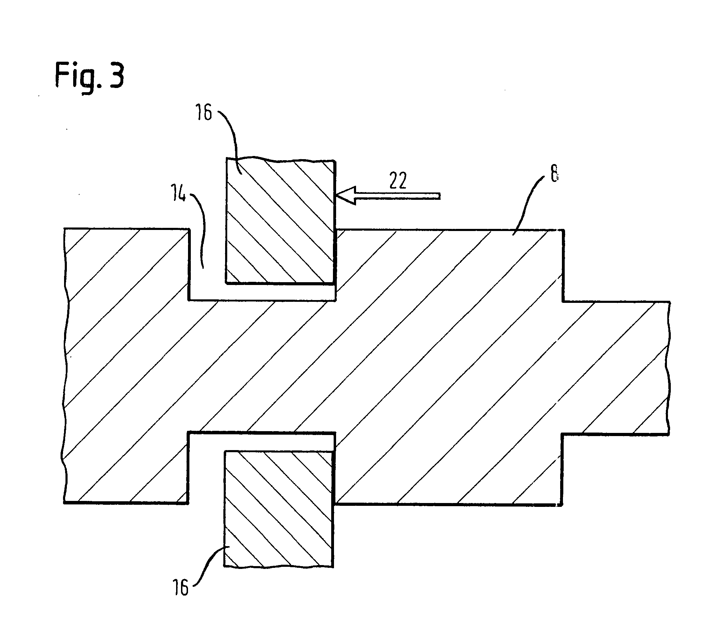

Im Betrieb wird die vorgestellte Spritzgießmaschine 1 folgendermaßen verwendet. Durch Beaufschlagen der Druckkammern der Druckkissen 12 wird der Prägespalt 20 eingestellt. Durch Betätigen der Verfahrzylinder 6 werden die auf den Formaufspannplatten 2, 4 vorgesehenen Formwerkzeughälften auf Anschlag zugefahren, so dass die Größe der nicht dargestellten Formkavität einer endgültigen Kavitätsgröße entspricht. Die Caliber 16 finden sich jetzt gegenüber den Säulen 8 in einer solchen Position, dass zwischen den entsprechenden kraftaufnehmenden Flächen der Caliber 16 in der Figur 1 rechts und den kraftaufnehmenden Flächen der Nut 14 ein dem Prägespalt 20 entsprechender Abstand besteht. Durch Betätigen der Verriegelungszylinder 18 werden die Caliber 16 in die Nut 14 eingefahren, wobei zwischen den entsprechenden kraftaufnehmenden Flächen der Prägespalt 20 gewahrt wird. Dies ist in der Figur 2 dargestellt. Nun kann der Verfahrzylinder 6 kraftfrei geschaltet werden, oder aber gegebenenfalls noch eine geringe Zuhaltekraft aufbringen. Sodann beginnt das Einspritzen mittels einer nicht dargestellten Einspritzeinheit durch eine Düsenöffnung in der festen Formaufspannplatte 4. Der durch das in die Formkavität eingespritzte thermoplastische Material aufgebaute Druck bewirkt ein Verschieben der beweglichen Formaufspannplatte 2 von der festen Formaufspannplatte 4 weg, wobei die Formwerkzeughälften voneinander weg gefahren werden. Die bewegliche Formaufspannplatte 2 kann mit den von ihr getragenen Säulen 8, die durch die blockierten Druckkissen 12 im wesentlichen fest mit ihr verbunden sind, so lange nach links ausweichen, bis die korrespondierenden kraftaufnehmenden Flächen von Nut 14 und Caliber 16 aneinander anliegen, wie in Fig. 3 dargestellt. Die Öffnungsbewegung des Formwerkzeugs und die entsprechende Bewegung der Säulen 8 wird durch den Pfeil 22 angedeutet. Das Formwerkzeug ist nun um den Prägespalt 20 geöffnet. Sobald also beim Öffnen der Formaufspannplatten 2, 4 dieser Abstand zwischen den Formwerkzeughälfte erreicht ist, liegt durch das Aneinanderanliegen der korrespondierenden kraftaufnehmenden Flächen von Nut 14 und Caliber 16 eine mechanische Begrenzung vor. Nun kann durch Aufbringen von Schließdruck in den Druckkissen 12, in der Figur 1 in dem der beweglichen Formaufspannplatte 2 zugewandten Zylinderraum, die Schließkraft aufgebracht werden, und das Formwerkzeug wieder geschlossen werden. Hierbei bewegt sich die bewegliche Formaufspannplatte 2 nach rechts und das in der Formkavität enthaltene und gegebenenfalls weiter eingebrachte thermoplastische Material wird verprägt. Sobald die beiden Formwerkzeughälften wieder in Anschlag stehen, die Formkavität also ihre endgültige Größe erreicht hat, ist der Prägevorgang im wesentlichen beendet. Er kann jedoch noch aufrechterhalten werden, bis eine tatsächliche Abkühlung des hergestellten Formteils erfolgt ist.

In diesem Zustand befinden sich die kraftaufnehmenden Flächen von Nut 14 und Caliber 16 in inniger Verbindung unter Schließkraft. Um ein Öffnen des Formwerkzeugs zu ermöglichen, muss nun der von der beweglichen Formaufspannplatte 2 abgewandte Zylinderraum der Druckkissen 12 mit Druck beaufschlagt werden. Dies erfolgt mit Hilfe der Wegmesssysteme derart, dass durch das Entlasten der Säulen, d. h. durch das Abheben der kraftaufnehmenden Flächen voneinander, genau wieder der Prägespalt 20 als Abstand zwischen den korrespondierenden Flächen angefahren wird, wie in Fig. 2 dargestellt. In diesem Zustand befinden sich die Seitenwände von Nuten 14 und Calibem 16 nicht in ein Eingriff, so dass die Verriegelungszylinder 18 betätigt und die Caliber gezogen werden können. Durch Betätigen der Verfahrzylinder 6 kann nun das Formwerkzeug geöffnet und das fertige Teil entnommen werden.

Bei einem nächsten Zyklus fahren die Verfahrzylinder 6 die Formwerkzeughälften wieder auf Anschlag, die Caliber 16 werden in die Nuten 14 eingefahren, wobei zwischen diesen durch das vorhergehende Säulenentlasten bereits der Prägespalt 20 eingestellt ist.

Vorteilhaft an dem vorgestellten Verfahren ist also, dass es möglich ist, einen Prägespalt 20 einzustellen, bevor der Spritzprägevorgang gestartet wird, und insbesondere dass das Einstellen des Prägespaltes 20 durch ein entsprechendes relatives Positionieren von Nuten 14 und Calibem 16 vorgenommen und beim während des Spritzprägezyklusses erfolgenden Säulenentlasten sofort wieder hergestellt werden kann.

### Bezugszeichenliste

- 1: Schließeinheit
- 2: bewegliche Formaufspannplatte
- 4: feste Formaufspannplatte
- 6: Verfahrzylinder
- 8: Säule
- 10: Kolben
- 12: Druckkissen
- 14: Nut
- 16: Caliber
- 18: Verriegelungszylinder
- 20: Prägespalt
- 22: Öffnungsbewegung

## Patentansprüche

1. Verfahren zum Spritzprägen von thermoplastischem Material, insbesondere Kunststoff, mit einer Spritzgießmaschine, umfassend eine feste (4) und eine bewegliche Formaufspannplatte (2), die jeweils eine Formwerkzeughälfte tragen, die in geschlossenem Zustand eine Formkavität definieren, wobei die Formaufspannplatten (2, 4) zur Schließkraftaufnahme durch Säulen (8) verbindbar sowie mittels einer Verriegelungseinrichtung (18) umfassend Aufnahmeelemente (14) an den Säulen (8) und darin einfahrbare Verriegelungselemente (16) gegenseitig Verriegelbar sind, mit den folgenden Schritte:
- Einstellen eines Prägespaltes (20) zwischen den Aufnahmeelementen (14) der Säulen (8) und den Verriegelungselementen (16),
- Zufahren des Formwerkzeugs,
- Verriegeln der Formaufspannplatten (2, 4) durch das Einfahren von den Verriegelungselementen, insbesondere Klammern (16), in den entsprechende Aufnahmeelemente, insbesondere Nuten (14),
- Beginn des Einspritzens von plastifiziertem Material,
- Öffnen des Formwerkzeugs durch den von der eingespritzten Schmelze aufgebauten Druck under Anlage der Verriegelungselemente (16) an den Aufnahmeelementen (14) bis zu einem mechanisch begrenzten Abstand zwischen den Formwerkzeughälften, der dem Prägespalt (20) entspricht, und
- Schließen des Formwerkzeugs mit Verprägen der eingebrachten Schmelze unter Aufbringen von Schließkraft.

2. Verfahren nach Anspruch 1,
**dadurch gekennzeichnet, dass**
das Einstellen des Prägespaltes (20) das Anfahren einer entsprechenden Position der Aufnahmeelemente (14) relativ zu den Verriegelungselementen (16) umfasst, derart dass zwischen korrespondierenden, im Schließzustand kraftaufnehmenden Flächen beim Verriegeln ein im wesentlichen dem Prägespalt (20) entsprechender Abstand eingehalten wird.

3. Verfahren nach Anspruch 2,
**dadurch gekennzeichnet, dass**
das Anfahren der Prägespaltposition bereits bei einem Entlasten der Säulen (8) erfolgt.

4. Verfahren nach Anspruch 3,
**dadurch gekennzeichnet, dass**
die Schließkraft durch hydraulische Druckkissen (12) aufgebracht wird, die beim Entlasten der Säulen (8) derart angesteuert werden, dass die Prägespaltposition angefahren wird, wobei die Druckkissen (12) dann in dieser Stellung blockiert werden.

5. Verfahren nach einem der Ansprüche 1-4,
**dadurch gekennzeichnet, dass**
die Aufnahmeelemente (14) an den Säulen (8) vorgesehen sind.

6. Verfahren nach einem der Ansprüche 1-5,
**dadurch gekennzeichnet, dass**
das Einstellen des Prägespaltes (20) mithilfe von an den vier Säulen (8) vorgesehenen Wegmeßsystemen erfolgt.

7. Verfahren nach einem der Ansprüche 1-6,
**dadurch gekennzeichnet, dass**
das Zufahren des Formwerkzeugs auf Anschlag erfolgt, so dass die Größe der Formkavität im wesentlichen einer endgültigen Kavitätsgröße entspricht.

8. Verfahren nach einem der Ansprüche 1-7.
**dadurch gekennzeichnet, dass**
der Beginn des Einspritzens und ein Freigeben der beweglichen Formaufspannplatte (2) im wesentlichen gleichzeitig erfolgen.

9. Verfahren nach einem der Ansprüche 1-8,
**dadurch gekennzeichnet, dass**
das Einspritzen während des Schließens des Formwerkzeugs fortgesetzt wird.

10. Verfahren nach einem der Ansprüche 1-9,
**dadurch gekennzeichnet, dass**
bewegliche, insbesondere federbelastete, Kerne das Öffnen des Formwerkzeugs unterstützen.

11. Verfahren nach einem der Ansprüche 1-10,
**dadurch gekennzeichnet, dass**
das Formwerkzeug nach dem Zufahren und vor dem Einspritzen zugehalten wird.

12. Verfahren nach einem der Ansprüche 1-11,
**dadurch gekennzeichnet, dass**
während des Öffnens des Formwerkzeugs ein definierter Gegendruck auf die bewegte Formaufspannplatte (2) aufgebracht wird.

13. Verfahren nach einem der Ansprüche 1 - 12,
**dadurch gekennzeichnet, dass**
langfaserverstärktes Thermoplast (LFT) verarbeitet wird.

## Claims

1. Method of compression moulding thermoplastic material, in particular plastic material, with an injection moulding machine comprising a fixed (4) and a movable platen (2) each of which carries a half-mould which define a cavity formed when the mould is closed, with the platens (2, 4) being connectable by tie rods (8) for absorbing a clamping force and with the platens (2, 4) being lockable relative to each other by means of a locking device (18) comprising receiving elements (14) at the tie rods (8) and locking elements (16) which are retractable therein, the method comprising the steps of:
- setting a compression gap (20) between the receiving elements (14) of the tie rods (8) and the locking elements (16),
- closing the mould,
- locking the platens (2, 4) by moving the locking elements, in particular clamps (16), into the respective receiving elements, in particular grooves (14),
- starting injection of plasticized material,
- opening the mould as a result of the pressure generated by the injected plasticized material by bringing the locking elements (16) in contact with the receiving elements (14) until a mechanically limited distance between the half-moulds corresponds to the compression gap (20), and
- closing the mould through application of a clamping force, thereby compressing the injected plasticized material.

2. Method according to claim 1, **characterized in that** the setting of the compression gap (20) includes the step of moving the receiving elements (14) in a position relative to the locking elements (16) such that a distance is maintained between corresponding force-absorbing surfaces when locking the platens (2, 4), which distance corresponds essentially to the compression gap (20).

3. Method according to claim 2, **characterized in that** the movement to the compression gap position is executed when the tie rods (8) are being relieved.

4. Method according to claim 3, **characterized in that** the clamping force is generated by hydraulic pressure pads (12) which are controlled during relief of the tie rods (8) such that the pressure pads (12) are blocked in position when the compression gap position has been reached.

5. Method according to one of claims 1 to 4, **characterized in that** the receiving elements (14) are provided on the tie rods.

6. Method according to one of claims 1 to 5, **characterized in that** the setting of the compression gap (20) is implemented using a distance measuring assembly provided on the four tie rods (8).

7. Method according to one of claims 1 to 6, **characterized in that** the closing of the mould includes a stop contact so that the cavity has a size which substantially corresponds to a final cavity size.

8. Method according to one of claims 1 to 7, **characterized in that** the start of the injection is initiated essentially simultaneously with a release of the movable platen (2).

9. Method according to one of claims 1 to 8, **characterized in that** injection is continued while the mould is being closed.

10. Method according to one of claims 1 to 9, **characterized in that** the opening of the mould is assisted by movable, in particular springloaded, cores.

11. Method according to one of claims 1 to 10, **characterized in that** the mould is maintained clamped after closing and prior to injection.

12. Method according to one of claims 1 to 11, **characterized in that** while the mould is being opened, the moved platen (2) is subjected to a defined counterpressure.

13. Method according to one of claims 1 to 12, **characterized in that** a long fibre-reinforced thermoplastic material is processed.

## Revendications

1. Procédé d'estampage par injection de matériau thermoplastique, en particulier de plastique, avec une presse d'injection, comprenant un plateau porte-outillage fixe (4) et un plateau porte-outillage mobile (2) qui portent chacun une moitié d'outil de formage qui définissent à l'état fermé une cavité de formage, les plateaux porte-outillage (2, 4) pouvant être reliés pour la réception de la force de fermeture par des colonnes (8), ainsi que pouvant être verrouillés mutuellement au moyen d'un dispositif de verrouillage (18) comprenant des éléments de réception (14) sur les colonnes (8) et des éléments de verrouillage (16) pouvant rentrer dedans, le procédé comportant les étapes suivantes :
- réglage de la fente d'estampage (20) entre les éléments de réception (14) des colonnes (8) et les éléments de verrouillage (16),
- fermeture de l'outil de formage,
- verrouillage des plateaux porte-outillage (2, 4) par la rentrée des éléments de verrouillage, en particulier d'agrafes (16) dans les éléments de réception correspondants, en particulier des rainures (14),
- début de l'injection de matériau plastifié,
- ouverture de l'outil de formage par la pression établie par la fonte injectée en appuyant les éléments de verrouillage (16) contre les éléments de réception (14) jusqu'à une distance délimitée mécaniquement entre les moitiés d'outil de formage, laquelle correspond à la fente d'estampage (20), et
- fermeture de l'outil de formage avec estampage de la fonte introduite en appliquant la force de fermeture.

2. Procédé selon la revendication 1,
**caractérisé en ce que**
le réglage de la fente d'estampage (20) comporte l'arrivage des éléments de réception (14) dans une position correspondante par rapport aux éléments de verrouillage (16) de telle manière qu'une distance correspondant sensiblement à la fente d'estampage (20) soit respectée entre des surfaces correspondantes, recevant la force à l'état de fermeture lors du verrouillage.

3. Procédé selon la revendication 2,
**caractérisé en ce que**
l'arrivage dans la position de fente d'estampage est déjà effectué lors d'une décharge des colonnes (8).

4. Procédé selon la revendication 3,
**caractérisé en ce que**
la force de fermeture est appliquée par des coussins de pression hydrauliques (12) qui sont commandés lors de la décharge des colonnes (8) de telle manière que la position de la fente d'estampage soit atteinte, les coussins de pression (12) étant alors bloqués dans cette position.

5. Procédé selon l'une quelconque des revendications 1 à 4,
**caractérisé en ce que**
les éléments de réception (14) sont prévus sur les colonnes (8).

6. Procédé selon l'une quelconque des revendications 1 à 5,
**caractérisé en ce que**
le réglage de la fente d'estampage (20) est effectué à l'aide de systèmes de mesure de déplacement prévus sur les quatre colonnes (8).

7. Procédé selon l'une quelconque des revendications 1 à 6,
**caractérisé en ce que**
la fermeture de l'outil de formage est effectuée sur la butée de sorte que la grandeur de la cavité de formage corresponde sensiblement à une grandeur de cavité définitive.

8. Procédé selon l'une quelconque des revendications 1 à 7,
**caractérisé en ce que**
le début de l'injection et une libération du plateau porte-outillage mobile (2) sont réalisés sensiblement en même temps.

9. Procédé selon l'une quelconque des revendications 1 à 8,
**caractérisé en ce que**
l'injection est poursuivie pendant la fermeture de l'outil de formage.

10. Procédé selon l'une quelconque des revendications 1 à 9,
**caractérisé en ce que**
des noyaux mobiles, en particulier sollicités par ressort assistent l'ouverture de l'outil de formage.

11. Procédé selon l'une quelconque des revendications 1 à 10,
**caractérisé en ce que**
l'outil de formage est maintenu fermé après la fermeture et avant l'injection.

12. Procédé selon l'une quelconque des revendications 1 à 11,
**caractérisé en ce que**
pendant l'ouverture de l'outil de formage, une contre-pression définie est appliquée sur le plateau porte-outillage (2) mobile.

13. Procédé selon l'une quelconque des revendications 1 à 12,
**caractérisé en ce que**
du thermoplaste renforcé par des fibres longues (LFT) est traité.
